# NOUVEAU FASCICULE DE BREVET EUROPEEN

(11) **EP 0 595 740 B2**
(45) Date de publication et mention de la décision concernant l'opposition: **17.04.2002**
(45) Mention de la délivrance du brevet: 10.12.1997
(21) Numéro de dépôt: 93420432.2
(22) Date de dépôt: 29.10.1993
(51) Int. Cl.: C09K 3/10, C09D 183/04, C08L 83/04

(54) **Utilisation de compositions silicones pour le traitement de joints plats, notamment de joints de culasse**
Verwendung von Silikonzusammensetzungen zur Behandlung von Flachdichtungen, insbesondere von Zylinderkopfdichtungen
Use of silicon compositions for the treatment of gaskets, especially cylinder head gaskets

(30) Priorité: 30.10.1992 FR 9213089
(43) Date de publication de la demande: 04.05.1994
(73) Titulaire: RHODIA CHIMIE, 92408 Courbevoie Cédex (FR)
(72) Inventeur: Bouvy, Bernard, F-69160 Tassin La Demi Lune (FR); Branlard, Paul, F-69005 Lyon (FR); Feder, Michel, F-69003 Lyon (FR)
(74) Mandataire: Trolliet, Maurice

(56) Documents cités:
- EP-A- 0 015 346
- EP-A- 0 220 997
- EP-A- 0 416 516
- EP-A- 0 426 487
- DE-A- 3 245 664
- FR-A- 2 405 985
- US-A- 3 936 582
- US-A- 4 865 911
- CHEMICAL ABSTRACTS, vol. 90, no. 20, 14 Mai 1979, Columbus, Ohio, US; abstract no. 153567y, O.A.MUZOVSKAJA ET AL 'adhessive composition based on a,w-polydimethylsiloxanediol' page 68 ;colonne R ; & PROM. OBRATSY, TOVARNYE ZNAKI vol. 55, no. 46 , 1978 page 67 OTKRYTIYA, IZOBRET.

## Description

La présente invention a pour objet l'utilisation de compositions à base de polymères silicones pour le traitement de joints plats, notamment pour imprégner ou vernir les joints de culasse (cylinder head gasket) des moteurs à explosion.

Le fonctionnement d'un moteur à explosion nécessite une forte cohésion des pièces fixes, une lubrification intime des pièces mobiles et un refroidissement efficace de l'ensemble bloc-moteur. Le joint de culasse joue un double rôle ; il assure la cohésion de l'ensemble démontable bloc-moteur / culasses ainsi que l'étanchéité des circulations croisées du liquide de refroidissement (eau additionnée de glycol et d'agents alcalins), de l'huile et des gaz en cours de combustion.

Les joints de culasse sont des matériaux composites très élaborés comprenant une âme métallique en tôle finement perforée, une couche de colle (cellulosique, époxyde ou autre), un carton (de préférence sans amiante) composé de fibres organiques et de charges minérales, des sertissures des anneaux de feu s'ouvrant sur la chambre d'explosion, un trottoir en élastomère silicone pour circonscrire les fuites possibles sur la surface.

Les joints de culasse doivent subir préalablement à leur emploi deux types de traitement à l'aide de silicones, un traitement d'imprégnation destiné à remplir les vides afin d'hydrofuger le carton et améliorer sa tenue thermique, ainsi qu'un traitement de vernissage destiné à abaisser le coefficient de frottement du joint et induire une bonne anti-adhérence.

Les imprégnants et vernis généralement utilisés sont des compositions constituées d'huiles ou de résines silicones de faible viscosité, comportant des groupements fonctionnels SiH (US-A-4 720 316 ; EP-A-272 382), SiVinyl (DE-A-3 731 032 ; US-A-4 499 135), ou de mélanges d'une huile ou résine silicone comportant des groupements fonctionnels SiH et d'une huile ou résine silicone comportant des groupements fonctionnels SiVinyl (DE-A-3 718 559 ; EP-A-471 979 ; DE-A-3 544 740), capables de réticuler à température élevée (généralement supérieure à 100°C) en présence d'un catalyseur métallique tel que les sels d'étain, de titane, de zirconium, de platine ou d'un péroxyde.

Les compositions à base d'huiles ou de résines silicones comportant des groupements fonctionnels SiH, SiVinyl ou SiH/SiVinyl présentent génralement au moins un des inconvénients suivants :
- le mélange constitué par la matrice silicone et le catalyseur est instable à températue ambiante (surtout en l'absence de solvant), cette instabilité se traduisant par une augmentation de viscosité, voir par une gélification du bain d'imprégnation ou de vernissage, ce qui nécesite un fréquent remplacement du bain d'imprégnation ou de vernissage ou un traitement en deux étapes ; par exemple les brevets US-A-4 720 316 et EP-A-272 382 préconisent la mise en oeuvre du catalyseur lors de la fabricaiton du carton, puis imprégnation du carton séché par une huile silicone à groupements SiH ;
- il est souvent nécessaire de disperser le mélange silicone+catalyseur dans un solvant organique afin d'augmenter la stabilité et diminuer la viscosité dudit mélange ; il en découle les inconvénients liés à l'utilisation de solvants (toxicité, prévoir des dispositifs de sécurité, de recyclage du solvant...)
- le prix de revient des matières premières est élevé, notamment dans le cas des huiles ou des résines vinylées associées éventuellement à des huiles ou résines à fonctions SiH et à un catalyseur au platine ; ces mélanges peuvent être très stables à température ambiante, notamment en présence d'un inhibiteur du platine, mais sont onéreux du fait de la mise en oeuvre d'huiles ou de résines vinylées.

La demanderesse a trouvé que l'utilisation de compositions constituées d'huiles ou de résines silicones hydroxylées, d'un réticulant silicone à fonctions SiH, d'un catalyseur de polyaddition de préférence au platine et éventuellement d'un inhibiteur dudit catalyseur, pour le traitement de joints plats, notamment pour l'imprégnation ou le vernissage des joints de culasse, présente simultanément plusieurs avantages, à savoir :
- l'excellent stabilité ("pot life") du mélange ; l'évolution de la viscosité d'un tel mélange reste faible, même en présence du catalyseur, pendant plusieurs heures, voire même pendant plusieurs jours après réalisation du mélange ; ceci autorise l'imprégnation du carton en une seule étape et un remplacement moins fréquent des bains d'imprégnation et de vernissage ;
- une bonne réactivité à chaud de ce même mélange ; un faible prix de revient lié à l'absence d'huile vinylée ;
- une bonne souplesse d'emploi ; la réactivité, la stabilité, la viscosité de l'imprégnant ou du vernis non réticulé, ainsi que le coefficient de friction du vernis ou de l'imprégnant réticulé pouvant être facilement modulés, dans une large mesure en modifiant la masse molaire de l'huile ou de la résine hydroxylée, les concentrations en platine et en inhibiteur, ainsi que le rapport SiH/SiOH ;
- la possibilité de formuler des mélanges stables et faiblement visqueux même en l'absence de tout solvant organique.

La demanderesse a également constaté que, contrairement à ce qu'on aurait pu craindre, les vernis obtenus sont exempts de bulles ou de défauts d'aspect, qui auraient pu être occasionnés par la libération d'hydrogène pendant la réaction de réticulation.

L'invention vise l'utilisation, pour le traitement de joints plats, de compositions à base de polymères silicones caractérisées en ce qu'elles sont constitués :
- (A) d'au moins un organohydrogénopolysiloxane ayant, par molécule, au moins 3 atomes d'hydrogène directement liés aux atomes de silicium et répondant à la formule générale moyenne

   RₓH_{y}SiO_{(4-x-y)/2}

   formule dans laquelle :
   . le symbole R représente des radicaux identiques ou différents alcoyles ou aryles contenant de 1 à 8 atomes de carbone, au moins 80 % en nombre desdits radicaux étant des radicaux méthyles ;
   . le symbole x représente un nombre quelconque allant de 1 à 1,99 ;
   . le symbole y représente un nombre quelconque allant de 0,1 à 1 ;
   . la somme x + y allant de 1,7 à 2,6 ;
- (B) d'au moins un organohydroxypolysiloxane choisi parmi les huiles α,ω-bis(hydroxy)organopolysiloxanes et les résines organopolysiloxanes contenant de à,02 à 0,2 fonction silanol pour 100 g. de résine, éventuellement en mélange avec des gommes α,ω-bis(hydroxy)organopolysiloxanes, les groupes organiques identiques ou différents étant des radicaux alcoyles ou aryles contenant de 1 à 8 atomes de carbone, le rapport nombre de fonctions SiH du constituant (A) / nombre de fonctions SiOH du constituant (B) étant de l'ordre de 1/1 à 100/1, de préférence de l'ordre de 10/1 à 30/1 ;
- (C) éventuellement un solvant desdits constituants (A) et (B) ;
- (D) une quantité efficace d'un catalyseur de polyaddition ;
- (E) éventuellement une quantité efficace d'au moins un agent inhibiteur de formation de gel à la température de stockage de ladite composition ;
les viscosités respectives des constituants (A) et (B) et les quantités de solvant éventuel étant telles que la viscosité à 25°C de ladite composition ne dépasse pas 10 000 mPa.s.

Selon l'invention on entend par "viscosité" aussi bien la viscosité cinématique mesurée selon la norme AFNOR T 60 - 100 d'octobre 1970 (pour des fluides silicones de viscosité pouvant aller jusqu'à 1 000 mPa.s) que la viscosité dynamique mesurée selon la norme AFNOR NF T 76 102 de février 1972 (pour des fluides de viscosité supérieure).

Le constituant (A) peut être linéaire, ramifié ou cyclique ; pour des raisons économiques, sa viscosité est de préférence inférieure à 100 mPa.s ; les radicaux organiques identiques ou différents sont de préférence méthyle, éthyle et/ou phényle. Lorsque celui-ci est linéaire, les atomes d'hydrogène des fonctions SiH sont liés directement aux atomes de silicium situés en bout(s) de chaîne et/ou dans la chaîne.

A titre d'exemple de constituant (A) linéaire, on peut citer les polyméthylhydrogénosiloxanes à extrémités triméthylsiloxy, les polydiméthylpolyméthylhydrogénosiloxanes à extrémités triméthylsiloxy et/ou hydrogénodiméthylsiloxy.

Parmi les polymères cycliques peuvent être cités ceux répondant aux formules suivantes :

[OSi(CH₃)H]₄ ; [OSi(CH₃)H]₅ ; [OSi(CH₃)H]₃; [OSi(CH₃)H]₆; [OSi(C₂H₅)H]₃

A titre d'exemples concrets de polymères ramifiés peuvent être cités :

CH₃Si[OSi(CH₃)₂H]₃ ; Si[OSi(CH₃)₂]₄; C₃H₇Si[OSi(CH₃)₂H)₃

HSi[OSi(CH₃)₃] [OSi(CH₃)₂H]₂ ; Si[OSi(CH₃)(C₂H₅)H][OSi(CH₃)₂H]₃

ainsi que ceux constitués de motifs SiO₂ et H(CH₃)₂SiO_{0,5} de rapport CH₃/Si de 1 à 1,5.

Le constituant (B) peut présenter une viscosité pouvant atteindre 200 000 mPa.s. ; pour des raisons économiques, on choisit un constituant dont la viscosité est généralement de l'ordre de 20 à 10 000 mPa.s.
Les groupes organiques identiques ou différents généralement présents dans les huiles ou gommes α,ω-(hydroxylées sont les radicaux méthyle, éthyle, phényle, trifluoropropyle. De préférence au moins 80 % en nombre desdits groupes organiques sont des groupes méthyles liés directement aux atomes de silicium. Dans le cadre de la présente invention on préfère plus spécialement les α,ω-bis(hydroxy)polydiméthylsiloxanes.
Les résines à fonctions silanol présentent par molécule au moins un des motifs R'₃SiO_{0,5} (motif M) et R'₂SiO (motif D), en association avec au moins un des motifs R'SiO_{1,5} (motif T) et SiO₂ (motif Q). Les radicaux R' généralement présents sont méthyle, éthyle, isopropyle, tertiobutyle et n-hexyle. Comme exemples de résines on peut citer les résines MQ, MDQ, TD et MDT.
Parmi les solvants éventuels (C) des constituants (A) ou (B) permettant de régler la viscosité de la composition, on peut citer les solvants classiques des polymères silicones, comme par exemple les solvants de type aromatique tels que xylène et toluène, les solvants aliphatiques saturés tels que hexane, heptane, white spirit, tétrahydrofuranne et diéthyléther, les solvants chlorés tels que chlorure de méthylène et perchloroéthylène. Dans le cadre de la présente invention on préfère toutefois ne pas utiliser de solvant.

Parmi les catalyseurs de polyaddition, on peut citer les dérivés ou complexes de métaux tels que le platine, le rhodium, le palladium. Le catalyseur (D) est de préférence un complexe ou un dérivé du platine, notamment les complexes de platine-oléfine comme décrit dans les brevets US-A-3 159 601 et US-A-3 159 662, les produits de réaction des dérivés du platine avec des alcools, des aldéhydes et des éthers décrits dans le brevet US-A-3 220 972, les catalyseurs platine vinylsiloxane décrits dans FR-A-1 313 846 et son addition FR-A-88 676 et FR-A-1 480 409 ainsi que les complexes décrits dans les brevets US-A-3 715 334, US-A-3 775 452 et US-A-3 814 730.

Des catalyseurs intéressants sont les complexes platine-divinyl-1,3 tétraméthyl-1,1,3,3 disiloxane, platine-tétraméthyl-1,3,5,7 tétravinyl-1,3,5,7cyclotétrasiloxane. La quantité de catalyseur à mettre en oeuvre est généralement de l'ordre de 5 à 200 parties en poids, exprimées en platine, pour 10⁶ parties en poids de constituants (A) et (B).

L'agent inhibiteur de formation de gel est présent en quantité suffisante pour inhiber l'action du catalyseur à la température de stockage de la composition de l'invention, cette action inhibitrice cessant lors du traitement de réticulation à température élevée ; cette quantité est généralement de l'ordre de 0,05 à 0,4 parties en poids pour 100 parties du poids des constituants (A) et (B) lorsque le catalyseur mis en oeuvre est un catalyseur au platine.

Parmi les inhibiteurs, on peut citer par exemple les dialkyldicarboxylates (US-A-4 255 870 ; US-A-4 476 166), les dialkylacétylènedicarboxylates (brevets US-A-4 347 346), les alcools acétyléniques (US-A-3 989 866 ; US-A-4 336 364 ; US-A-3 445 420).

La composition ci-dessus décrite peut être utilisée pour traiter d'une manière générale les joints plats, qu'il s'agisse de joints pour moteurs, de joints de pots d'échappement, de joints de culasse, que ceux-ci soient en carton, en liège, en métal.

On entend par "traitement" toute opération de revêtement ou d'imprégnation des joints afin d'améliorer les propriétés physiques ou physicochimiques de ceux-ci.

Selon la nature désirée du traitement, celui-ci peut être effectué par trempage, par enduction (par exemple au pistolet, au rouleau) dudit joint puis réticulation par passage pendant 10 min à 1 heure dans des fours chauffés à une température de 120 à 180°C.

L'invention est tout particulièrement bien adaptée au traitement de joints de culasse, que ce soit le vernissage ou l'imprégnation.

Un premier objet préférentiel de l'invention consiste en l'utilisation, pour vernir les joints de culasse, de compositions à base de polymères silicones caractérisées en ce qu'elles sont constituées :
- (A) d'au moins un organohydrogénoppolysiloxane ayant, par molécule, au moins 3 atomes d'hydrogène directement liés aux atomes de silicium et répondant à la formule générale moyenne

   RₓH_{y}SiO_{(4-x-y)/2}

   formule dans laquelle
   - le symbole R représente des radicaux identiques ou différents alcoyles ou aryles contenant de 1 à 8 atomes de carbone, au moins 80 % en nombre desdits radicaux étant des radicaux méthyles ;
   - le symbole x représente un nombre quelconque allant de 1 à 1,99 ;
   - le symbole y représente un nombre quelconque allant de 0,1 à 1 ;
   - la somme x + y allant de 1,7 à 2,6 ;
   la viscosité dudit constituant (A) étant inférieure à 100 mPa.s ;
- (B) d'au moins un organohydroxypolysiloxane choisi parmi les huiles α,ω-bis(hydroxy)organopolysiloxanes et les résines organopolysiloxanes contenant de 0,02 à 0,2 fonction silanol pour 100 g de résine, éventuellement en mélange avec des gommes α,ω-bis(hydroxy)organopolysiloxanes, les groupes organiques identiques ou différents étant des radicaux alcoyles ou aryles contenant de 1 à 8 atomes de carbone, la viscosité dudit constituant (B) étant de l'ordre de 500 à 20 000 mPa.s. le rapport nombre de fonctions SiH du constituant (A) / nombre de fonctions SiOH du constituant (B) étant de l'ordre de 1/1 à 50/1, de préférence de l'ordre de 10/1 à 20/1 ;
- (C) éventuellement un solvant desdits constituants (A) et (B) ;
- (D) une quantité efficace d'un catalyseur de polyaddition ;
- (E) éventuellement une quantité efficace d'au moins un agent inhibiteur de formation de gel à la température de stockage de ladite composition ;
les viscosités respectives des constituants (A) et (B) et les quantités de solvant éventuel étant telles que la viscosité à 25°C de ladite composition ne dépasse pas 10 000 mPa.s. et soit de préférence de l'ordre de 1 500 à 4 000 mPa.s.

Ledit catalyseur est de préférence un complexe ou un dérivé du platine, présent en quantité de l'ordre de 5 à 100 parties en poids, de préférence de l'ordre de 10 à 30 parties en poids par million (p.p.m.) de parties des constituants (A) et (B).

L'opération de vernissage peut être réalisée par enduction à l'aide d'un dispositif industriel d'enduction des cartons tel que tête d'enduction à deux rouleaux, puis réticulation par passage dans un four chauffé à une température de l'ordre de 120 à 200°C, généralement de l'ordre de150 à 180°C pendant 10 min à 1 heure.

Les épaisseurs de vernis déposées sont de l'ordre de 10 à 20 µm, ce qui correspond à des quantités de composition de l'ordre de 10 à 20 g/m².

Un deuxième objet préférentiel de l'invention consiste en l'utilisation, pour l'imprégnaiton des joints de culasse, de compositions à base de polymères silicones caractérisées en ce qu'elles sont constituées :
- (A) d'au moins un organohydrogénopolysiloxane ayant, par molécule, au moins 3 atomes d'hydrogène directement liés aux atomes de silicium et répondant à la formule générale moyenne

   RₓH_{y}SiO_{(4-x-y)/2}

   formule dans laquelle
   - le symbole R représente des radicaux identiques ou différents alcoyles ou aryles contenant de 1 à 8 atomes de carbone, au moins 80 % en nombre desdits radicaux étant des radicaux méthyles ;
   - le symbole x représente un nombre quelconque allant de 1 à 1,99 ;
   - le symbole y représente un nombre quelconque allant de 0,1 à 1 ;
   - la somme x + y allant de 1,7 à 2,6 ;
la viscosité dudit constituant (A) étant inférieure à 100 mPa.s ;
- (B) d'au moins un organohydroxypolysiloxane choisi parmi les huiles α,ω-bis(hydroxy)organopolysiloxanes et les résines organopolysiloxanes contenant de 0,02 à 0,2 fonction silanol pour 100 g de résine, éventuellement en mélange avec des gommes α,ω-bis(hydroxy)organopolysiloxanes, les groupes organiques identiques ou différents étant des radicaux alcoyles ou aryles contenant de 1 à 8 atomes de carbone, la viscosité dudit constituant (B) étant de l'ordre de 500 à 20 000 mPa.s., le rapport nombre de fonctions SiH du constituant (A) / nombre de fonctions SiOH du constituant (B) étant de l'ordre de 1/1 à 100/1, de préférence de l'ordre de 10/1 à 30/1 ;
- (C) éventuellement un solvant desdits constituants (A) et (B) ;
- (D) une quantité efficace d'un catalyseur de polyaddition ;
- (E) éventuellement une quantité efficace d'au moins un agent inhibiteur de formation de gel à la température de stockage de ladite composition ;
les viscosités respectives des constituants (A) et (B) et les quantités de solvant éventuel étant telles que la viscosité à 25°C de ladite composition ne dépasse pas 100 mPa.s et soit de préférence de l'ordre de 30 à 80 mPa.s.

ledit catalyseur est de préférence un complexe ou un dérivé du platine, présent en quantité de l'ordre de 10 à 200 parties en poids, de préférence de l'ordre de 20 à 100 parties en poids par million (p.p.m.) de parties des constituants (A) et (B).

L'opération d'imprégnation peut être réalisée par trempage des joints dans un bain constitué de la compostiion ci-dessus pendant une durée (de l'ordre de 10 s à 1 min) permettant de remplir les vides du carton, puis réticulation par passage dans un four chauffé à une température de l'ordre de 120 à 200°C, généralement de l'ordre de 150 à 180°C pendant 10 min à 1 heure.

### Exemple 1

Dans un flacon en verre de 2 litres muni d'un agitateur à ancre, on introduit dans l'ordre :
- 600 g d'une huile polyméthylhydrogénosiloxane contenant 1,5 % de son poids d'hydrogène provenant de fonctions SiH et présentant une viscosité de 20 mPa.s à 25°C ;
- 400 g d'une huile α,ω-bis(hydroxy)diméthylpolysiloxane contenant 0,8 % de son poids de fonctions hydroxyles et présentant une viscosité de 180 mPa.s. à 25°C ;
- 1,5 g d'éthynylcyclohexanol.

Après homogénéisation pendant 30 min, on ajoute 10 g de catalyseur KARSTEDT (solution catalytique de platine complexé par du divinyltétraméthylsiloxane, solution contenant 0,06 % en poids de platine). La teneur en platine du mélange final est de 60 ppm (parties par million).

Après agitation du mélange pendant environ 15 min, on obtient un liquide incolore et limpide de viscosité égale à 51 mPa.s à 25°C.

Ce mélange est encore stable après 4 jours à 23°C, sa viscosité est alors de 58 mPa.s ; il se solidifie après 5 jours de stockage à cette température.

### Exemple 2

On répète l'opération décrite à l'exemple 1 en mettant en oeuvre 50 g de catalyseur au lieu de 100 g ; la teneur en platine du mélange final est de 30 ppm. Le mélange présente une viscosité de 60 mPa.s après 5 jours de stockage à température ambiante ; il gélifie le 6^{ème} jour.

### Exemples 3 et 4

Une éprouvette de matériau composite pour joint de culasse, comprenant un carton et une âme métallique, est immergée dans un récipient contenant le liquide d'imprégnation de l'exemple 1 ou 2, pendant une durée permettant l'imprégnation de 100 g de carton par 10 g de liquide.

Après égouttage, le carton est chauffé dans une étuve à 160°C pendant 15 minutes.

Le degré de polymérisation de l'imprégnant silicone est évalué par extraction au toluène pendant 7 heures, à l'aide d'un extracteur SOXHLET ® (commercialisé par PROLABO).

Les taux de silicones extraits après imprégnation à l'aide des liquides des exemples 1 et 2 sont respectivement de 27 % et de 64 %.

### Exemple 5

Dans un récipient semblable à celui de l'exemple 1, on charge dans l'ordre :
- 250 g d'une huile α,ω-bis(hydroxy)diméthylpolysiloxane contenant 0,03 % en poids de fonctions hydroxyles et présentant une viscosité de 175 000 mPa.s à 25°C ;
- 550 g d'une huile α,ω-bis(hydroxy)diméthylpolysiloxane contenant 0,24 % en poids de fonctions hydroxyles et présentant une viscosité de 750 mPa.s. à 25°C ;
- 100 g d'une huile polyméthylhydrogénosiloxane contenant 1,5 % en poids d'hydrogène sous forme de fonctions SiH et présentant une viscosité de 20 mPa.s à 25°C ;
- 100 g d'une résine polysiloxane hydroxylée liquide dont la viscosité est de 600 mPa.s et dont la teneur pondérale en groupements hydroxyles est de 0,5 % ; cette résine est constituée de motifs méthylsiliciés M, D et T avec un rapport CH₃/Si de 1,5 ;
- 1 g d'éthynylcyclohexanol.

Après homogénéisation complète du mélange, on ajoute 50 g du catalyseur de l'exemple 1; la concentration en platine du mélange final est de 30 ppm.

Après agitation du mélange pendant 30 min, on obtient un liquide incolore, limpide de viscosité égale à 3 300 mPa.s à 25°C.

Après 8 jours de stockage à 23°C, la viscosité est alors de 3 600 mPa.s à 25°C.

La durée d'utilisation du bain d'enduction est donc supérieure à 8 jours à température ambiante.

### Exemple 6

Dans un malaxeur à bras, on charge dans l'ordre:
- 60 g d'une gomme α,ω-bis(hydroxy)diméthylpolysiloxane contenant 0,01 % en poids de fonctions hydroxyles et présentant une masse moléculaire en nombre Mₙ de l'ordre de 340 000 ;
- 820 g d'une huile α,ω-bis(hydroxy)diméthylpolysiloxane contenant 0,24 % en poids de fonctions hydroxyles et présentant une viscosité de 750 mPa.s à 25°C ;
- 120 g d'une huile polyméthylhydrogénosiloxane contenant 1,5 % en poids d'hydrogène sous forme de fonctions SiH et présentant une viscosité de 20 mPa.s à 25°C ;
- 1,5 g d'éthynylcyclohexanol.

Après homogénéisation complète du mélange, on ajoute 50 g du catalyseur de l'exemple 1 ; la concentration en platine du mélange final est de 30 ppm.

Après agitation du mélange pendant 1 heure, on obtient un liquide incolore, limpide de viscosité égale à 2 700 mPa.s à 25°C, dont la stabilité est de 8 jours.

### Exemples 7 et 8

Les compositions décrites aux exemples 5 et 6 sont déposées à l'aide d'une barre de MEYER n° 4, sur une plaque d'aluminium de 1,5 mm d'épaisseur, puis durcie par chauffage à 160°C dans une étuve pendant 15 minutes.

L'épaisseur du vernis déposé est de 0,025 mm.

La dureté KOENIG des vernis obtenus à l'aide des compositions des exemples 5 et 6, mesurée selon la norme ASTM D 4366-8, est égale respectivement à 70 et 76.

Les vernis obtenus sont exempts de bulles ou de défauts d'aspect, qui auraient pu être occasionnés par la libération d'hydrogène pendant la réaciton de réticulation.

### Exemples 9 et 10

Les compositions décrites aux exemples 5 et 6 sont déposées à l'aide d'une barre de MEYER, sur une plaque de polyester THERPHANE ® (commercialisé par RHONE-POULENC) de 125 µm d'épaisseur, puis durcie par chauffage à 120°C dans une étuve pendant 20 minutes.

L'épaisseur du vernis déposé est de l'ordre de 6 µm ± 2 µm.

Les propriétés tribologiques du vernis sont déterminées à l'aide d'un tribomètre pion/plan décrit par exemple dans "Polymer Science and Technology", volume 58 (Advances in Polymer Friction and Wear), page 499 et suivantes.

Le plan est constitué par la couche de vernis à tester, le pion est une bille en acier 316 L de 5 mm de diamètre ; la vitesse linéaire de frottement est de 2 cm/s ; la force normale appliquée (N) est de 0,83 Newton.

Chaque essai dure 1 heure et est reproduit 3 fois.

Le coefficient de frottement µ est égal à T/N, T représentant la force tangentielle mesurée.

Les résultats obtenus figurent au tableau suivant

| durée du frottement (en heures) | µ correspondant à la composition de l'exemple | |
|---|---|---|
| | 5 | 6 |
| 0 | 0,06+0,02 | 0,06 ± 0,03 |
| 1 | 0,07 ±0,02 | 0,07 ± 0,02 |

A titre comparatif, on peut signaler que la résine 21385® (résine commercialisée par RHONE-POULENC et résultant d'une réaction de polyaddition SiH/SiVinyle catalysée au platine) soumise au même test présente une valeur µ de 0,08 ± 0,02 au temps 0 et une valeur µ de 0,09 ± 0,03 après une heure de frottement.

Les vernis de l'invention sont donc au moins équivalents à ceux obtenus à l'aide de la résine antérieure considérée comme performante.

Visuellement on constate que l'échantillon correspondant
- au vernis de l'exemple 5 ne présente pas de rayure après 1 heure de frottement
- au vernis de l'exemple 6 présente une rayure peu marquée après 1 heure de frottement
- au vernis dérivé de la composition 21385 présente une rayure plus marquée après 1 heure de frottement.

## Revendications

1. Utilisation, pour le traitement de joints plats, de compositions à base de polymères silicones **caractérisées en ce qu'**elles sont constituées
- (A) d'au moins un organohydrogénopolysiloxane ayant, par molécule, au moins 3 atomes d'hydrogène directement liés aux atomes de silicium et répondant à la formule générale moyenne
RₓH_{y}SiO_{(4-x-y)/2}
formule dans laquelle
- le symbole R représente des radicaux identiques ou différents alcoyles ou aryles contenant de 1 à 8 atomes de carbone, au moins 80 % en nombre desdits radicaux étant des radicaux méthyles ;
- le symbole x représente un nombre quelconque allant de 1 à 1,99 ;
- le symbole y représente un nombre quelconque allant de 0,1 à 1 ;
- la somme x + y allant de 1,7 à 2,6 ;
- (B) d'au moins un organohydroxypolysiloxane choisi parmi les huiles α,ω-bis(hydroxy)organopolysiloxanes et les résines organopolysiloxanes contenant de 0,02 à 0,2 fonction silanol pour 100 g de résine, éventuellement en mélange avec des gommes α,ω-bis(hydroxy)organopolysiloxanes, les groupes organiques identiques ou différents étant des radicaux alcoyles ou aryles contenant de 1 à 8 atomes de carbone,
le rapport nombre de fonctions SiH du constituant (A) / nombre de fonctions SiOH du constituant (B) étant de l'ordre de 1/1 à 100/1, de préférence de l'ordre de 10/1 à 30/1 ;
- (C) éventuellement un solvant desdits constituants (A) et (B) ;
- (D) une quantité efficace d'un catalyseur de polyaddition ;
- (E) éventuellement une quantité efficace d'au moins un agent inhibiteur de formation de gel à la température de stockage de ladite composition ;
les viscosités respectives des constituants (A) et (B) et les quantités de solvant éventuel étant telles que la viscosité à 25°C de ladite composition ne dépasse pas 10 000 mPa.s..

2. Utilisation de compositions selon la revendication 1) **caractérisées en ce que** le constituant (A) présente une viscosité inférieure à 100 mPa.s et le constituant (B) une viscosité de l'ordre de 20 à 10 000 mPa.s..

3. Utilisation de compositions selon l'une des revendications 1) ou 2) **caractérisées en ce que** le catalyseur (D) de polyaddition est un dérivé ou un complexe du platine, mis en oeuvre en quantité de l'ordre de 5 à 200 parties en poids, exprimées en platine, pour 10⁶ parties en poids de constituants (A) et (B).

4. Utilisation, pour vernir les joints de culasse, de compositions à base de polymères silicones **caractérisées en ce qu'**elles sont constituées :
- (A) d'au moins un organohydrogénopolysiloxane ayant, par molécule, au moins 3 atomes d'hydrogène directement liés aux atomes de silicium et répondant à la formule générale moyenne
RₓH_{y}SiO_{(4-x-y)/2}
formule dans laquelle
- le symbole R représente des radicaux identiques ou différents alcoyles ou aryles contenant de 1 à 8 atomes de carbone, au moins 80 % en nombre desdits radicaux étant des radicaux méthyles ;
- le symbole x représente un nombre quelconque allant de 1 à 1,99 ;
- le symbole y représente un nombre quelconque allant de 0,1 à 1 ;
- la somme x + y allant de 1,7 à 2,6 ;
la viscosité dudit constituant (A) étant inférieure à 100 mPa.s. ;
- (B) d'au moins un organohydroxypolysiloxane choisi parmi les huiles α,ω-bis(hydroxy)organopolysiloxanes et les résines organopolysiloxanes contenant de 0,02 à 0,2 fonction silanol pour 100 g de résine, éventuellement en mélange avec des gommes α,ω-bis(hydroxy)organopolysiloxanes, les groupes organiques identiques ou différents étant des radicaux alcoyles ou aryles contenant de 1 à 8 atomes de carbone, la viscosité dudit constituant (B) étant de l'ordre de 500 à 20 000 mPa.s, le rapport nombre de fonctions SiH du constituant (A) / nombre de fonctions SiOH du constituant (B) étant de l'ordre de 1/1 à 50/1, de préférence de l'ordre de 10/1 à 20/1 ;
- (C) éventuellement un solvant desdits constituants (A) et (B) ;
- (D) une quantité efficace d'un catalyseur de polyaddition ;
- (E) éventuellement une quantité efficace d'au moins un agent inhibiteur de formation de gel à la température de stockage de ladite composition ;
les viscosités respectives des constituants (A) et (B) et les quantités de solvant éventuel étant telles que la viscosité à 25°C de ladite composition ne dépasse pas 10 000 mPa.s. et soit de préférence de l'ordre de 1 500 à 4 000 mPa.s..

5. Utilisation de compositions selon la revendication 4), **caractérisées en ce que** le catalyseur (D) de polyaddition est un dérivé ou un complexe du platine, mis en oeuvre en quantité de l'ordre de 5 à 100 parties en poids, de préférence de l'ordre de 10 à 60 parties en poids, exprimées en platine, pour 10⁶ parties en poids de constituants (A) et (B).

6. Utilisation, pour l'imprégnation des joints de culasse, de compositions à base de polymères silicones **caractérisées en ce qu'**elles sont constituées :
- (A) d'au moins un organohydrogénopolysiloxane ayant, par molécule, au moins 3 atomes d'hydrogène directement liés aux atomes de silicium et répondant à la formule générale moyenne
RₓH_{y}SiO_{(4-x-y)/2}
formule dans laquelle
- le symbole R représente des radicaux identiques ou différents alcoyles ou aryles contenant de 1 à 8 atomes de carbone, au moins 80 % en nombre desdits radicaux étant des radicaux méthyles ;
- le symbole x représente un nombre quelconque allant de 1 à 1,99 ;
- le symbole y représente un nombre quelconque allant de 0,1 à 1 ;
- la somme x + y allant de 1,7 à 2,6 ;
la viscosité dudit constituant (A) étant inférieure à 100 mPa.s. ;
- (B) d'au moins un organohydroxypolysiloxane choisi parmi les huiles α,ω-bis(hydroxy)organopolysiloxanes et les résines organopolysiloxanes contenant de 0,02 à 0,2 fonction silanol pour 100 g de résine, éventuellement en mélange avec des gommes α,ω-bis(hydroxy)organopolysiloxanes, les groupes organiques identiques ou différents étant des radicaux alcoyles ou aryles contenant de 1 à 8 atomes de carbone, la viscosité dudit constituant (B) étant de l'ordre de 500 à 20 000 mPa.s., le rapport nombre de fonctions SiH du constituant (A) / nombre de fonctions SiOH du constituant (B) étant de l'ordre de 1/1 à 100/1, de préférence de l'ordre de 10/1 à 30/1 ;
- (C) éventuellement un solvant desdits constituants (A) et (B) ;
- (D) une quantité efficace d'un catalyseur de polyaddition ;
- (E) éventuellement une quantité efficace d'au moins un agent inhibiteur de formation de gel à la température de stockage de ladite composition ;
les viscosités respectives des constituants (A) et (B) et les quantités de solvant éventuel étant telles que la viscosité à 25°C de ladite composition ne dépasse pas 100 mPa.s. et soit de préférence de l'ordre de 30 à 80 mPa.s..

7. Utilisation de compositions selon la revendication 6) **caractérisées en ce que** le catalyseur (D) de polyaddition est un dérivé ou un complexe du platine, mis en oeuvre en quantité de l'ordre de 10 à 200 parties en poids, de préférence de l'ordre de 20 à 100 parties en poids, exprimées en platine pour 10⁶ parties en poids de constituants (A) et (B).

8. Utilisation de compositions selon l'une quelconque des revendications 3), 5) ou 7), **caractérisées en ce que** l'agent inhibiteur de formation de gel (E) est présent en quantité de l'ordre de 0,05 à 0,4 parties en poids pour 100 parties du poids des constituants (A) et (B).

9. Procédé de traitement de joints plats par trempage ou enduction desdits joints dans un bain ou à l'aide d'un bain comprenant les compositions décrites à l'une quelconque des revendications 1), 2), 3) ou 8), puis réticulation par passage pendant 10 min à 1 heure dans des fours chauffés à une température de 120 à 180°C.

10. Procédé de vernissage de joints de culasse par enduction à l'aide d'un bain comprenant les compositions décrites dans l'une quelconque des revendications 4), 5) ou 8), puis réticulation par passage dans un four chauffé à une température de l'ordre de 120 à 200°C, généralement de l'ordre de150 à 180°C, pendant 10 min à 1 heure.

11. Procédé d'imprégnation de joints de culasse par trempage dans un bain comprenant les compositions décrites dans l'une quelconque des revendications 6), 7) ou 8), puis réticulation par passage dans un four chauffé à une température de l'ordre de 120 à 200°C, généralement de l'ordre de 150 à 180°C pendant 10 min à 1 heure.

12. Joints traités selon le procédé faisant l'objet de l'une quelconque des revendications 9) à 11).

## Claims

1. Use, for the treatment of flat gaskets, of compositions based on silicone polymers, **characterized in that** they consist
- (A) of at least one organohydropolysiloxane which has, per molecule, at least 3 hydrogen atoms bonded directly to the silicon atoms and which correspond to the average general formula
RₓH_{y}SiO_{(4-x-y)/2}
in which formula
- the symbol R denotes identical or different alkyl or aryl radicals containing from 1 to 8 carbon atoms, at least 80 % of the number of the said radicals being methyl radicals;
- the symbol x denotes any number ranging from 1 to 1.99;
- the symbol y denotes any number ranging from 0.1 to 1;
- the sum x+y ranging from 1.7 to 2.6;
- (B) of at least one organohydroxypolysiloxane chosen from α,ω-bis(hydroxy)organopolysiloxane oils and organopolysiloxane resins containing from 0.02 to 0.2 silanol functional group per 100 g of resin, optionally mixed with α,ω-bis(hydroxy)-organopolysiloxane gums, the identical or different organic groups being alkyl or aryl radicals containing from 1 to 8 carbon atoms, the ratio number of SiH functional groups of the constituent (A)/number of SiOH functional groups of the constituent (B) being of the order of 1/1 to 100/1, preferably of the order of 10/1 to 30/1;
- (C) optionally a solvent for the said constituents (A) and (B);
- (D) an effective quantity of a polyaddition catalyst;
- (E) optionally an effective quantity of at least one inhibitor of gel formation at the storage temperature of the said composition;
the respective viscosities of the constituents (A) and (B) and the quantities of optional solvent being such that the viscosity at 25°C of the said composition does not exceed 10 000 mPa·s.

2. Use of compositions according to Claim 1, **characterized in that** the constituent (A) has a viscosity lower than 100 mPa·s and the constituent (B) a viscosity of the order of 20 to 10 000 mPa·s.

3. Use of compositions according to either of Claims 1 and 2, **characterized in that** the polyaddition catalyst (D) is a derivative or complex of platinum, used in a quantity of the order of 5 to 200 parts by weight, expressed as platinum, per 10⁶ parts by weight of constituents (A) and (B).

4. Use, for varnishing cylinder head gaskets, of compositions based on silicone polymers, **characterized in that** they consist.
- (A) of at least one organohydropolysiloxane which has, per molecule, at least 3 hydrogen atoms bonded directly to the silicon atoms and which correspond to the average general formula
RₓH_{y}SiO_{(4-x-y)/z}
in which formula
- the symbol R denotes identical or different alkyl or aryl radicals containing from 1 to 8 carbon atoms, at least 80 % of the number of the said radicals being methyl radicals;
- the symbol x denotes any number ranging from 1 to 1.99;
- the symbol y denotes any number ranging from 0.1 to 1;
- the sum x+y ranging from 1.7 to 2.6;
the viscosity of the said constituent (A) being lower than 100 mPa·s;
- (B) of at least one organohydroxypolysiloxane chosen from α,ω-bis(hydroxy)organopolysiloxane oils and organopolysiloxane resins containing from 0.02 to 0.2 silanoi functional group per 100 g of resin, optionally mixed with α,ω-bis(hydroxy)-organopolysiloxane gums, the identical or different organic groups being alkyl or aryl radicals containing from 1 to 8 carbon atoms, the viscosity of the said constituent (B) being of the order of 500 to 20 000 mPa·s,
the ratio number of SiH functional groups of the constituent (A)/number of SiOH functional groups of the constituent (B) being of the order of 1/1 to 50/1, preferably of the order of 10/1 to 20/1;
- (C) optionally a solvent for the said constituents (A) and (B);
- (D) an effective quantity of a polyaddition catalyst;
- (E) optionally an effective quantity of at least one inhibitor of gel formation at the storage temperature of the said composition;
the respective viscosities of the constituents (A) and (B) and the quantities of optional solvent being such that the viscosity at 25°C of the said composition does not exceed 10 000 mPa·s and is preferably of the order of 1 500 to 4 000 mPa·s,

5. Use of compositions according to Claim 4, **characterized in that** the polyaddition catalyst (D) is a derivative or a complex of platinum, used in a quantity of the order of 5 to 100 parts by weight, preferably of the order of 10 to 60 parts by weight, expressed as platinum, per 10⁶ parts by weight of constituents (A) and (B).

6. Use, for the impregnation of cylinder head gaskets, of compositions based on silicone polymers, **characterized in that** they consist:
- (A) of at least one organohydropolysiloxane which has, per molecule, at least 3 hydrogen atoms bonded directly to the silicon atoms and which correspond to the average general formula
RₓH_{y}SiO_{(4-x-y)/2}
in which formula
- the symbol R denotes identical or different alkyl or aryl radicals containing from 1 to 8 carbon atoms, at least 80 % of the number of the said radicals being methyl radicals;
- the symbol x denotes any number ranging from 1 to 1.99;
- the symbol y denotes any number ranging from 0.1 to 1;
- the sum x+y ranging from 1.7 to 2.6;
the viscosity of the said constituent (A) being lower than 100 mPa·s;
- (B) of at least one organohydroxypolysiloxane chosen from α,ω-bis(hydroxy)organopolysiloxane oils and organopolysiloxane resins containing from 0.02 to 0.2 silanol functional group per 100 g of resin, optionally mixed with α,ω-bis(hydroxy)-organopolysiloxane gums, the identical or different organic groups being alkyl or aryl radicals containing from 1 to 8 carbon atoms, the viscosity of the said constituent (B) being of the order of 500 to 20 000 mPa·s, the ratio number of SiH functional groups of the constituent (A)/number of SiOH functional groups of the constituent (B) being of the order of 1/1 to 100/1, preferably of the order of 10/1 to 30/1;
- (C) optionally a solvent for the said constituents (A) and (B);
- (D) an effective quantity of a polyaddition catalyst;
- (E) optionally an effective quantity of at least one inhibitor of gel formation at the storage temperature of the said composition;
the respective viscosities of the constituents (A) and (B) and the quantities of optional solvent being such that the viscosity at 25°C of the said composition does not exceed 100 mPa·s and is preferably of the order of 30 to 80 mPa·s.

7. Use of compositions according to Claim 6, **characterized in that** the polyaddition catalyst (D) is a derivative or complex of platinum, used in a quantity of the order of 10 to 200 parts by weight, preferably of the order of 20 to 100 parts by weight, expressed as platinum, per 10⁶ parts by weight of constituents (A) and (B).

8. Use of compositions according to any one of Claims 3, 5 and 7, **characterized in that** the agent inhibiting gel formation (E) is present in a quantity of the order of 0.05 to 0.4 part by weight per 100 parts of the weight of the constituents (A) and (B).

9. Process for treating flat gaskets by soaking or coating the said gaskets in a bath or with the aid of a bath including the compositions described in any one of Claims 1, 2, 3 and 8, and then crosslinking by placing for 10 min to 1 hour in ovens heated to a temperature of 120 to 180°C.

10. Process for varnishing cylinder head gaskets by coating with the aid of a bath including the compositions described in any one of Claims 4, 5 and 8, then crosslinking by placing in an oven heated to a temperature of the order of 120 to 200°C, generally of the order of 150 to 180°C, for 10 min to 1 hour.

11. Process for impregnating cylinder head gaskets by soaking in a bath including the compositions described in any one of Claims 6, 7 and 8, then crosslinking by placing in an oven heated to a temperature of the order of 120 to 200°C, generally of the order of 150 to 180°C, for 10 min to 1 hour.

12. Gaskets treated according to the process forming the subject-matter of any one of Claims 9 to 11.

## Patentansprüche

1. Verwendung von Zusammensetzungen auf der Grundlage von Siliconpolymeren zur Behandlung von Flachdichtungen, **dadurch gekennzeichnet, daß** sie umfassen
- (A) mindestens ein Organohydrogenopolysiloxan mit mindestens 3 direkt an Siliciumatome gebundenen Wasserstoffatomen pro Molekül und entsprechend der allgemeinen mittleren Formel
RₓH_{y}SiO_{(4-x-y)/2}
worin
. das Symbol R gleiche oder verschiedene Alkyl- oder Arylreste mit 1 bis 8 Kohlenstoffatomen bedeutet, wobei mindestens 80 Zahlen-% der Reste Methylgruppen sind;
. das Symbol x eine beliebige Zahl von 1 bis 1,99 bezeichnet;
. das Symbol y eine beliebige Zahl von 0,1 bis 1 bezeichnet;
. die Summe x+y 1,7 bis 2,6 ist;
- (B) mindestens ein Organohydroxypolysiloxan, ausgewählt aus α,ω-Bis-(hydroxy)organopolysiloxanölen und Organopolysiloxanharzen, enthaltend 0,02 bis 0,2 Silanolfunktionen auf 100 g Harz, gegebenenfalls im Gemisch mit α,ω-Bis-(hydroxy)organopolysiloxangummis,wobei die gleichen oder verschiedenen organischen Gruppen Alkyl- oder Arylreste mit 1 bis 8 Kohlenstoffatomen sind, wobei das Verhältnis Anzahl der SiH-Funktionen des Bestandteils (A)/Anzahl der SiOH-Funktionen des Bestandteils (B) im Bereich von 1/1 bis 100/1, bevorzugt im Bereich von 10/1 bis 30/1 liegt;
- (C) gegebenenfalls ein Lösungsmittel für die Bestandteile (A) und (B);
- (D) eine wirksame Menge eines Polyadditionskatalysators;
- (E) gegebenenfalls eine wirksame Menge mindestens eines Hemmstoffs der Gelbildung bei der Lagertemperatur der Zusammensetzung, wobei die jeweiligen Viskositäten der Bestandteile (A) und (B) und die Mengen des gegebenenfalls vorhandenen Lösungsmittels derart sind, daß die Viskosität der Zusammensetzung bei 25°C 10.000 mPa.s nicht überschreitet.

2. Verwendung der Zusammensetzungen nach Anspruch 1, **dadurch gekennzeichnet, daß** der Bestandteil (A) eine Viskosität von weniger als 100 mPa.s besitzt und der Bestandteil (B) eine Viskosität im Bereich von 20 bis 10.000 mPa.s besitzt.

3. Verwendung der Zusammensetzungen nach einem der Ansprüche 1 oder 2, **dadurch gekennzeichnet, daß** der Polyadditionskatalysator (D) ein Derivat oder ein Komplex von Platin ist, das bzw. der in einer Menge im Bereich von 5 bis 200 Gew.-Teilen, ausgedrückt als Platin, auf 10⁶ Gew.-Teile der Bestandteile (A) und (B) eingesetzt wird.

4. Verwendung von Zusammensetzungen auf der Basis von Siliconpolymeren zum Beschichten von Zylinderkopfdichtungen, **dadurch gekennzeichnet, daß** sie umfassen
- (A) mindestens ein Organohydrogenopolysiloxan mit mindestens 3 direkt an die Siliciumatome gebundenen Wasserstoffatomen pro Molekül und entsprechend der allgemeinen mittleren Formel
RₓH_{y}SiO_{(4-x-y)/2}
worin
. das Symbol R gleiche oder verschiedene Alkyl- oder Arylreste mit 1 bis 8 Kohlenstoffatomen bezeichnet, wobei mindestens 80 Zahlen-% der Reste Methylreste sind;
. das Symbol x eine beliebige Zahl von 1 bis 1,99 bezeichnet;
. das Symbol y eine beliebige Zahl von 0,1 bis 1 bezeichnet;
. die Summe x+y 1,7 bis 2,6 ist,
wobei die Viskosität des Bestandteils (A) kleiner als 100 mPa.s ist;
- (B) mindestens ein Organohydroxypolysiloxan, ausgewählt aus α,ω-Bis-(hydroxy)organopolysiloxanölen und Organopolysiloxanharzen mit 0,02 bis 0,2 Silanolfunktionen auf 100 g Harz, gegebenenfalls im Gemisch mit α,ω-Bis-(hydroxy)organopolysiloxangummis, wobei die gleichen oder verschiedenen organischen Gruppen Alkyl- oder Arylreste mit 1 bis 8 Kohlenstoffatomen sind, wobei die Viskosität des Bestandteils (B) im Bereich von 500 bis 20.000 mPa.s liegt,
wobei das Verhältnis Anzahl der SiH-Funktionen des Bestandteils (A)/Anzahl der SiOH-Funktionen des Bestandteils (B) im Bereich von 1/1 bis 50/1, bevorzugt im Bereich von 10/1 bis 20/1, liegt;
- (C) gegebenenfalls ein Lösungsmittel der Bestandteile (A) und (B);
- (D) eine wirksame Menge eines Polyadditionskatalysators;
- (E) gegebenenfalls eine wirksame Menge mindestens eines Hemmstoffs der Gelbildung bei der Lagertemperatur der Zusammensetzung, wobei die jeweiligen Viskositäten der Bestandteile (A) und (B) und die Mengen des gegebenenfalls vorhandenen Lösungsmittel derart sind, daß die Viskosität der Zusammensetzung bei 25°C nicht größer als 10.000 mPa.s ist und bevorzugt im Bereich von 1500 bis 4000 mPa.s liegt.

5. Verwendung der Zusammensetzungen nach Anspruch 4, **dadurch gekennzeichnet, daß** der Polyadditionskatalysator (D) ein Derivat oder Komplex von Platin ist, das/der in einer Menge im Bereich von 5 bis 100 Gew.-Teilen, bevorzugt im Bereich von 10 bis 60 Gew.-Teilen, ausgedrückt als Platin, auf 10⁶ Gew.-Teile der Bestandteile (A) und (B) eingesetzt wird.

6. Verwendung von Zusammensetzungen auf der Grundlage von Siliconpolymeren zur Imprägnierung von Zylinderkopfdichtungen, **dadurch gekennzeichnet, daß** sie umfassen
- (A) mindestens ein Organohydrogenopolysiloxan mit mindestens 3 direkt an die Siliciumatome gebundenen Wasserstoffatomen pro Molekül und entsprechend der allgemeinen mittleren Formel
RₓH_{y}SiO_{(4-x-y)/2}
worin
. das Symbol R gleiche oder verschiedene Alkyl- oder Arylreste mit 1 bis 8 Kohlenstoffatomen bezeichnet, wobei mindestens 80 Zahlen-% der Reste Methylreste sind;
. das Symbol x eine beliebige Zahl von 1 bis 1,99 bezeichnet;
. das Symbol y eine beliebige Zahl von 0,1 bis 1 bezeichnet;
. die Summe x+y 1,7 bis 2,6 ist,
wobei die Viskosität des Bestandteils (A) kleiner 100 mPa.s ist;
- (B) mindestens ein Organohydroxypolysiloxan, ausgewählt aus α,ω-Bis-(hydroxy)organopolysiloxanölen und Organopolysiloxanharzen, enthaltend 0,02 bis 0,2 Silanolfunktionen auf 100 g Harz, gegebenenfalls im Gemisch mit α,ω-Bis-(hydroxy)organopolysiloxangummis, wobei die gleichen oder verschiedenen organischen Gruppen Alkyl- oder Arylreste mit 1 bis 8 Kohlenstoffatomen sind, wobei die Viskosität des Bestandteils (B) im Bereich von 500 bis 20.000 mPa.s liegt, wobei das Verhältnis Anzahl der SiH-Funktionen des Bestandteils (A)/Anzahl der SiOH-Funktionen des Bestandteils (B) im Bereich von 1/1 bis 100/1, bevorzugt im Bereich von 10/1 bis 30/1, liegt;
- (C) gegebenenfalls ein Lösungsmittel der Bestandteile (A) und (B) ;
- (D) eine wirksame Menge eines Polyadditionskatalysators;
- (E) gegebenenfalls eine wirksame Menge mindestens eines Hemmstoffs der Gelbildung bei der Lagertemperatur der Zusammensetzung, wobei die jeweiligen Viskositäten der Bestandteile (A) und (B) und die Mengen des gegebenenfalls vorhandenen Lösungsmittels derart sind, daß die Viskosität der Zusammensetzung bei 25°C 100 mPa.s nicht überschreitet und bevorzugt im Bereich von 30 bis 80 mPa.s liegt.

7. Verwendung der Zusammensetzungen nach Anspruch 6, **dadurch gekennzeichnet, daß** der Polyadditionskatalysator (D) ein Derivat oder Komplex von Platin ist, das/der in einer Menge im Bereich von 10 bis 200 Gew.-Teilen, bevorzugt im Bereich von 20 bis 100 Gew.-Teilen, ausgedrückt als Platin, auf 10⁶ Gew.-Teile der Bestandteile (A) und (B) eingesetzt wird.

8. Verwendung der Zusammensetzungen nach einem der Ansprüche 3, 5 oder 7, **dadurch gekennzeichnet, daß** der Hemmstoff der Gelbildung (E) in einer Menge im Bereich von 0,05 bis 0,4 Gew.-Teilen auf 100 Gew.-Teile der Bestandteile (A) und (B) vorhanden ist.

9. Verfahren zur Behandlung von Flachdichtungen durch Eintauchen oder Beschichten der Dichtungen in ein(em) Bad oder mit Hilfe eines Bades, umfassend die in einem der Ansprüche 1, 2, 3 oder 8 beschriebenen Zusammensetzungen, anschließende Vernetzung durch Passage in Heizöfen mit einer Temperatur von 120 bis 180°C während 10 Minuten bis zu 1 Stunde.

10. Verfahren zum Beschichten von Zylinderkopfdichtungen durch Beschichten mit Hilfe eines Bades, umfassend die in einem der Ansprüche 4, 5 oder 8 beschriebenen Zusammensetzungen, anschließende Vernetzung durch Passage durch einen auf eine Temperatur im Bereich von 120 bis 200°C, allgemein im Bereich von 150 bis 180°C, geheizten Ofen während 10 Minuten bis zu 1 Stunde.

11. Verfahren zur Imprägnierung von Zylinderkopfdichtungen durch Eintauchen in ein Bad, umfassend die in einem der Ansprüche 6, 7 oder 8 beschriebenen Zusammensetzungen, anschließende Vernetzung durch Passage durch einen auf eine Temperatur im Bereich von 120 bis 200°C, allgemein im Bereich von 150 bis 180°C, geheizten Ofen für 10 Minuten bis zu 1 Stunde.

12. Dichtungen, behandelt nach einem Verfahren nach einem der Ansprüche 9 bis 11.
